# EUROPÄISCHE PATENTSCHRIFT

(11) **EP 1 331 412 B1**
(45) Veröffentlichungstag und Bekanntmachung des Hinweises auf die Patenterteilung: **26.09.2007**
(21) Anmeldenummer: 03001869.1
(22) Anmeldetag: 29.01.2003
(51) Int. Cl.: F16C 33/20, F16C 33/30

(54) **Verfahren zur Herstellung einer Lager- oder Antriebsvorrichtung mit beschichteten Elementen**
Method of manufacturing a bearing device or driving device having coated elements
Méthode de fabrication d'un dispositif de palier ou dispositif d'entraînement comprenant des éléments revêtus

(30) Priorität: 29.01.2002 DE 10203295
(43) Veröffentlichungstag der Anmeldung: 30.07.2003
(73) Patentinhaber: Görlach, Bernd, Dr., 72770 Reutlingen (DE)
(72) Erfinder: Görlach, Bernd, Dr., 72770 Reutlingen (DE)
(74) Vertreter: Patentanwälte Hosenthien-Held und Dr. Held

(56) Entgegenhaltungen:
- EP-A- 1 036 938
- DE-A- 2 206 400
- DE-A- 3 238 987

## Beschreibung

Die Erfindung betrifft ein Verfahren zur Herstellung einer Lager- oder Antriebsvorrichtung mit den Merkmalen des Oberbegriffs des Anspruches 1.

Ein Kugellager als eine bekannte Lagervorrichtung weist zwischen einem Innenring und einem Außenring mehrere Stahlkugeln auf, welche durch einen Käfig im Abstand zueinander gehalten werden. Ein Schmierstoff vermindert die Reibung und den Verschleiß im Kugellager und schützt gleichzeitig die Lagerelemente vor Korrosion. Für Spezialanwendungen, die möglichst ohne Schmierstoff auskommen sollen, kann das Kugellager auch sehr teure Lagerelemente aus einem Keramikmaterial, aus im Vakuum carbidbeschichtetem Stahl oder aus Kunststoffvollmaterial aufweisen.

Die EP 1 036 938 A2 beschreibt ein Verfahren der eingangs genannten Art zur Aufbringung einer Polyimidschicht, gemäß welchem eine flüssige Mischung von Polyimidharz mit Metallpartikeln wie Aluminium-, Zinn- oder Molybdändisulfid-Partikeln auf das Lagerelement aufgesprüht wird. Um die Schichtbildung zu vervollständigen, wird der Überzug z.B. bei 200°C gehärtet und anschließend poliert. Die Dicke beträgt dann etwa 50µm. Sie kann auch 20-40 µm betragen.

Der vorliegenden Erfindung liegt die Aufgabe zugrunde, ein Verfahren zur Herstellung einer Lager- oder Antriebsvorrichtung der eingangs genannten Art zu verbessern. Diese Aufgabe wird erfindungsgemäß gelöst durch ein Verfahren mit den Merkmalen des Anspruches 1. Vorteilhafte Ausgestaltungen sind Gegenstand der Unteransprüche

Die Polyimidschicht wird aus einem in Lösung befindlichen Präpolymerisat (Präpolyimid) aufgebaut, welches direkt aus den Ausgangssubstanzen oder durch Umkehr der Polymerisation gewonnen wird. In dieses Präpolyimid wird dann das Lagerelement oder Antriebselement eingetaucht, so dass sich - durch das Nachtemperieren - ein dünner Polyimidfilm bildet. Dabei müssen keine speziellen Schmierstoffe eingelagert werden, wobei eine solche Beigabe in das Präpolyimid aber optional möglich ist.

Mit der Polyimidschicht auf dem Trägermaterial des Lagerelementes bzw. Antriebselementes kann gegenüber den geschmierten Stahl-Lagerelementen der Schmierstoffbedarf und damit die Betriebskosten stark verringert werden, wobei vorzugsweise im Betrieb gar keine Schmierstoffzufuhr mehr notwendig ist, und gegenüber den Keramik-Lagerelementen, carbidbeschichteten Lagerelementen und Kunststoffvollmaterial-Lagerelementen die Herstellungskosten stark reduziert werden. Da Kunststoffvollmaterial-Lagerelemente eine sehr hohe Wasseraufnahme zeigen, die zu einer Brüchigkeit des Materials führen kann, besteht bei der erfindungsgemäß hergestellten Lagervorrichtung zudem der Vorteil, daß die Lagerelemente und Antriebselemente mit der Polyimidschicht vernachlässigbar wenig Wasser aufnehmen, also hydrolysestabil sind. Außerdem zeigt sich mit der erfindungsgemäßen Polyimidschicht eine höhere Lebensdauer der Lager- bzw. Antriebs Vorrichtung.

Die sehr dünne Ausbildung der Polyimidschicht ist einfacher und kostengünstiger herstellbar und erhöht die Vorteile der Hydrolysestabilität und der längere Lebensdauer. Als Korrosionsschutz des in der Regel. überwiegend aus Eisen, bestehenden Trägermaterials ist unterhalb der Polyimidschicht, also zeitlich vor deren Aufbringung, eine Passivierungsschicht auf das Trägermaterial aufgebracht. Sofern hohe Druckbelastungen in der Lagervorrichtung zu erwarten sind, kann unterhalb oder innerhalb der Polyimidschicht zusätzlich eine druckstabile Schicht auf das passivierte Trägematerial aufgebracht sein.

Die erfindungsgemäße Lager- oder Antriebsvorrichtung kann in den verschiedenste technischen Bereichen, wie Antriebstechnik oder Automobilbau, und in allen Dimensionsbereicherz, also sowohl bei sehr kleinen Abmessungen, wie Fein- und Mikromechaniken, als auch bei sehr großen Abmessungen, wie Windrädern, verwirklicht sein. Im Falle von Wälzlagern können die Ringe und/oder die Wälzkörper beschichtet sein. Die erfindungsgemäße Lager- oder Antriebsvorrichtung kann auch als ein Getriebe, beispielsweise ein Zahnradgetriebe, als ein Gleitlager, als eine Linearführung, beispielsweise mit relativ zueinander beweglichen Schienen, oder als ein Kettenantrieb ausgebildet sein

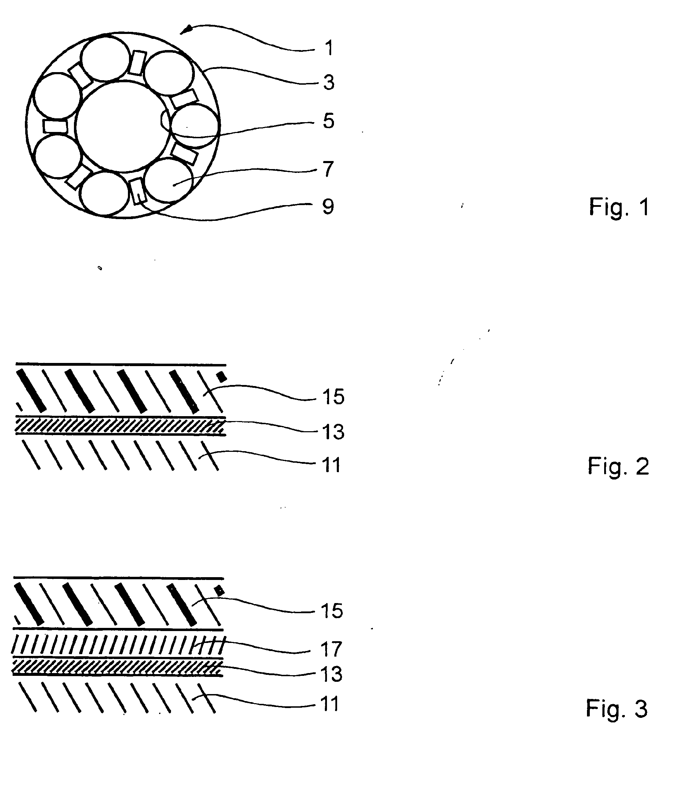

Im folgenden wird die Erfindung anhand zweier in der Zeichnung dargestellter
Ausführungsbeispiele näher erläutert. Es zeigen
- Fig. 1: eine Draufsicht auf das erste Ausführungsbeispiels,
- Fig. 2: einen Teilausschnitt des ersten Ausführungsbeispiels und
- Fig. 3: einen Teilausschnitt des zweiten Ausführungsbeispiels.

Im ersten Ausführungsbeispiel ist eine Lagervorrichtung 1 als Kugellager ausgebildet. Dabei sind zwischen einem Außenring 3 mit einem größeren Durchmesser und einem Innenring 5 mit einem geringeren Durchmesser mehrere Kugeln 7 angeordnet, welche durch einen Kugelkäfig 9 in Abstand zueinander gehalten werden. Die Kugeln 7 liegen in an sich bekannter Weise an der Innenwand des Außenrings 3 und der Außenwand des Innenrings 5 an. Die Innenwand des Außenrings 3, die Außenwand des Innenringes 5 und vorzugsweise auch die Kugeln 7 sind in der nachfolgend beschriebenen Weise beschichtet.

Auf einem metallischen Trägermaterial 11, vorzugsweise Maschinenbaustahl, ist zunächst eine sehr dünne Passivierungsschicht 13 von wenigen µm und auf dieser eine Polyimidschicht 15 aufgebracht. Die Polyimidschicht 15 ist im Vergleich zur Dicke oder zu anderen Abmessungen des metallischen Trägermaterials 11 sehr dünn, kleiner als 30 µm. Sie ist bis mindestens etwa 260° - 300°C temperaturstabil und nimmt vernachlässigbar wenig Wasser auf, ist also hydrolysestabil. Die geringe Dicke verhindert auch ein Abplatzen bei Belastungen. Die Passivierungsschicht 13 weist eine noch geringere Dicke auf.

Für die sehr einfache und kostengünstige Herstellung dieser genannten Hybridschichten wird das metallische Trägermaterial 11 zunächst passiviert. Als Ausgangssubstanzen des Polyimids wird beispielsweise ein Dianhydrid, beispielsweise Benzol-1,2,4,5-tetracarbonsäure-1,2:4,5-dianhydrid, und ein Diamin, beispielsweise 1,5 Diamino-5-methylpentan, verwendet. Aus diesen Ausgangssubstanzen werden zunächst in einer Lösung Präpolymerisate des Polyimids erzeugt. Das passivierte, zu beschichtende Lagerelement 3, 5 oder 7 wird dann in diese Präpolyimidlösung eingetaucht, so daß sich ein dünner Film bildet. Für die Polymerisation und zur Entfernung des Lösungsmittels erfolgt eine Nachtemperierung des Lagerelements 3, 5 bzw. 7, wodurch sich die endgültige Polyimidschicht 15 bildet. Vor dem Gebrauch der Lagervorrichtung 1 kann eine minimale Initialschmierung durch einen Tropfen Schmierstoff erfolgen. Im Betrieb benötigt die Lagervorrichtung keinen weiteren Schmierstoff, ist also dauergeschmiert. In einer abgewandelten Form wird der Schmierstofftropfen oder ein Additiv mit vergleichbarer Wirkung bereits der Präpolyimidlösung beigegeben, das dann ebenfalls die Reibeigenschaften, d.h. die Gleit- oder Reibwerte, verbessert.

Ein zweites Ausführungsbeispiel gleicht dem ersten Ausführungsbeispiel weitgehend, ist jedoch für spezielle Anwendungsfälle gedacht. Zwischen der Passivierungsschicht 13 und der Polyimidschicht 15 ist nämlich zusätzlich eine druckstabile Schicht 17 vorgesehen, beispielsweise ein Silikat. Auch in diesem zweiten Ausführungsbeispiel ist die Gesamtdicke der Polyimidschicht 15, der druckstabilen Schicht 17 und der Passivierungsschicht 13 sehr viel geringer als die Abmessungen des Trägermaterials 11, d.h. das Lagerelement 3, 5 oder 7 ist wieder sehr dünn beschichtet.

## Patentansprüche

1. Verfahren zur Herstellung einer Lager- oder Antriebsvorrichtung (1) mit wenigstens zwei relativ zueinander beweglichen Lagerelementen (3, 5, 7) bzw. Antriebselementen, gemäß welchem bei wenigstens einem Lagerelement (3, 5, 7) bzw. Antriebselement auf einem Trägermaterial (11) eine Polyimidschicht (15) aufgebracht wird, welche mit einer Dicke von weniger als 30 µm im Vergleich zum Trägermaterial (11) sehr dünn ist, **dadurch gekennzeichnet, dass** das Lagerelement (3, 5, 7) bzw. Antriebselement in eine Präpolyimidlösung eingetaucht wird, sich auf dem Lagerelement (3, 5, 7) bzw. Antriebselement ein dünner Film bildet und für die Polymerisation und Entfernung des Lösungsmittels das mit dem Film überzogene Lagerelement (3, 5, 7) bzw. Antriebselement nachtemperiert wird, wodurch sich die endgültige Polyimidschicht (15) bildet.

2. Verfahren nach Anspruch 1, **dadurch gekennzeichnet, dass** vor dem Aufbringen der Polyimidschicht (15) eine Passivierungsschicht (13) auf das metallische Trägermaterial (11) aufgebracht wird.

3. Verfahren nach Anspruch 2, **dadurch gekennzeichnet, dass** unterhalb und/oder innerhalb der Polyimidschicht (15) eine druckstabile Schicht (17) auf das passivierte Trägermaterial (11) aufgebracht ist.

4. Verfahren nach einem der vorhergehenden Ansprüche, **dadurch gekennzeichnet, dass** für die Präpolyimidlösung aus Ausgangssubstanzen in einer Lösung Präpolymerisate des Polyimids erzeugt werde.

5. Verfahren nach Anspruch 4, **dadurch gekennzeichnet, dass** als Ausgangssubstanzen des Polyimids ein Dianhydrid, beispielsweise Benzol-1,2,4,5-tetracarbonsäure-1,2;4,5-dianhydrid, und ein Diamin, beispielsweise 1,5 Diamino-5-methylpentan, verwendet werden.

6. Verfahren nach einem der vorhergehenden Ansprüche, **dadurch gekennzeichnet, dass** zur dauerschmierung der Präpolyimidlösung ein Schmierstoff tropfen oder ein Additiv zur Verbesserung der Reibeigenschaften beigegeben wird oder vor Gebrauch der Lagervorrichtung eine minimale Initialschmierung durch einen Tropfen Schmierstoff erfolgt.

7. Verfahren nach einem der vorhergehenden Ansprüche, **dadurch gekennzeichnet, dass** ein Lagen (3, 5) als ein Lagerelement der Lagervorrichtung (1) die Polyimidschicht (15) erhält.

8. Verfahren nach einem der vorhergehenden Ansprüche, **dadurch gekennzeichnet, dass** ein Wälzkörper (7) als ein Lagerelement der Lagervorrichtung (1) die Polyimidschicht (15) erhält.

## Claims

1. Method for producing a bearing or drive device (1) having at least two bearing elements (3, 5, 7) or drive elements which can be moved relative to each other, according to which method, for at least one bearing element (3, 5, 7) or drive element, a polyimide layer (15) is applied to a carrier material (11) and, with a thickness of less than 30µm, is very thin compared with the carrier material (11), **characterised in that** the bearing element (3, 5, 7) or drive element is immersed in a prepolyimide solution, a thin film is formed on the bearing element (3, 5, 7) or drive element and, for the polymerisation and removal of the solvent, the bearing element (3, 5, 7) or drive element that is covered with the film is subsequently tempered.

2. Method according to claim 1, **characterised in that**, before the polyimide layer (15) is applied, a passivation layer (13) is applied to the metal carrier material (11).

3. Method according to claim 2, **characterised in that**, below and/or within the polyimide layer (15), a pressure-stable layer (17) is applied to the passivated carrier material (11).

4. Method according to any one of the preceding claims, **characterised in that** prepolymerisates of the polyimide are produced from initial substances in a solution for the prepolyimide solution.

5. Method according to claim 4, **characterised in that** a dianhydride, for example, 1,2,4,5-benzenetetracarboxylic acid 1,2;4,5-dianhydride and a diamine, for example, 1,5-diamino-5-methylpentane are used as initial substances of the polyimide.

6. Method according to any one of the preceding claims, **characterised in that**, for permanent lubrication of the prepolyimide solution, a lubricant drop or an additive is added in order to improve the friction characteristics or, before the bearing device is used, a minimal initial lubrication is carried out using a lubricant drop.

7. Method according to any one of the preceding claims, **characterised in that** a bearing ring (3, 5), acting as a bearing element of the bearing device (1), receives the polyimide layer (15).

8. Method according to any one of the preceding claims, **characterised in that** a roller body (7), acting as a bearing element of the bearing device (1), receives the polyimide layer (15).

## Revendications

1. - Procédé de fabrication d'un dispositif de palier ou d'entraînement (1) avec au moins deux éléments de palier (3, 5, 7) ou éléments d'entraînement mobiles l'un par rapport à l'autre, selon lequel, dans le cas d'au moins un élément de palier (3, 5, 7) ou élément d'entraînement, sur une matière de support (11) est appliquée une couche de polyimide (15), laquelle est très mince par comparaison avec la matière de support (11) avec une épaisseur de moins de 30 pm, **caractérisé par le fait que** l'élément de palier (3, 5, 7) ou élément d'entraînement est immergé dans une solution de prépolyimide, un film mince se forme sur l'élément de palier (3, 5, 7) ou l'élément d'entraînement et, pour la polymérisation et l'élimination du solvant, l'élément de palier (3, 5, 7) ou élément d'entraînement revêtu par le film est recuit, ce par quoi la couche de polyimide finale définitive (15) se forme.

2. - Procédé selon la revendication 1, **caractérisé par le fait qu'**avant l'application de la couche de polyimide (15), une couche de passivation est appliquée sur la matière de support métallique (11).

3. - Procédé selon la revendication 2, **caractérisé par le fait qu'**au-dessous et/ou à l'intérieur de la couche de polyimide (15), une couche (17) stable à la pression est appliquée sur la matière de support passivée (11).

4. - Procédé selon l'une des revendications précédentes, **caractérisé par le fait que**, pour la solution de prépolyimide, des prépolymères du polyimide ont été obtenus à partir de substances de départ dans une solution.

5. - Procédé selon la revendication 4, **caractérisé par le fait que**, comme substances de départ du polyimide, un dianhydride, par exemple le dianhydride d'acide benzène-1, 2, 4 , 5 -tétracarboxylique 1,2 ; 4 ,5, et une diamine, par exemple le 1,5-diamino-5-méthylpentane, ont été utilisés.

6. - Procédé selon l'une des revendications précédentes, **caractérisé par le fait que**, pour la lubrification permanente, la solution de prépolyimide est additionnée d'une goutte de lubrifiant ou d'un additif pour l'amélioration des propriétés de frottement ou, avant l'utilisation du dispositif de palier, une lubrification initiale minimale a lieu par une goutte de lubrifiant.

7. - Procédé selon l'une des revendications précédentes, **caractérisé par le fait qu'**une bague de palier (3,5) en tant qu'un élément de palier du dispositif de palier (1) reçoit la couche de polyimide (15).

8. - Procédé selon l'une des revendications précédentes, **caractérisée par le fait qu'**un roulement (3,5) en tant qu'un élément de palier du dispositif de palier (1) reçoit la couche de polyimide (15).
